(19) Europäisches Patentamt
European Patent Office
Office européen des brevets

(11) EP 3 905 095 A1

(12) EUROPÄISCHE PATENTANMELDUNG

(43) Veröffentlichungstag:
03.11.2021 Patentblatt 2021/44

(51) Int Cl.:
G06F 30/10 (2020.01)          G06T 7/11 (2017.01)
G06T 7/66 (2017.01)           G06T 11/40 (2006.01)

(21) Anmeldenummer: 20172141.2

(22) Anmeldetag: 29.04.2020

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder:
• Waschew, Arthur
  52074 Aachen (DE)
• Husseini, Kamal
  52064 Aachen (DE)
• Knappe, Dominik
  59077 Hamm (DE)
• Döring, Jens-Erich
  41539 Dormagen (DE)

(54) COMPUTER-IMPLEMENTIERTES VERFAHREN ZUR RECHNERISCHEN ERMITTLUNG UND BEREITSTELLUNG ZUMINDEST EINES WERTES ZUMINDEST EINES PARAMETERS EINES FESTKÖRPERS

(57) Computer-implementiertes Verfahren zur rechnerischen Ermittlung eines Wertes eines Parameters eines Festkörpers, etwa eines Flächenträgheitsmomentes, mit den Schritten

a) Bereitstellen (S102) von Daten, die die Oberfläche eines Festkörpers (10) in Polygonen (22) beschreiben,
b) Definieren (S104) zumindest einer sich durch den Festkörper erstreckenden, virtuellen Betrachtungsebene (20), für die der Wert des Parameters des Festkörpers ermittelt werden soll,
c) für jeden Polygonzug (22), der die Betrachtungsebene (20) schneidet, Ermitteln (S106) von Schnittpunkten (S) des Polygonzugs (24) mit der Betrachtungsebene (20),
d) Ermitteln (S108) einer zweiten Strecke (30) zwischen den Schnittpunkten (S),
e) für jeden Schnittpunkt (S) Ermitteln (S110) eines Normalenvektors, welcher orthogonal auf dem Polygon (22) steht und ins Festkörperinnere zeigt,
f) für jeden Normalenvektor Ermitteln (S112) der Lage eines Elements (32) einer in der Betrachtungsebene angeordneten Festkörperschicht (36) des Festkörpers (10),
g) Ermitteln (S114) der vollständigen Festkörperschicht, und
h) Ermitteln (S116) des Wertes des Parameters.

FIG 2

EP 3 905 095 A1

**Beschreibung**

Die Erfindung betrifft ein computer-implementiertes Verfahren zur rechnerischen Ermittlung und Bereitstellung zumindest eines Wertes zumindest eines Parameters eines Festkörpers, mittels dem aus den die Oberfläche eines Festkörpers beschreibenden Daten ein oder mehrere Parameter, beispielsweise dessen Flächenträgheitsmoment, mit hinreichend hoher Genauigkeit und innerhalb einer akzeptablen Zeitdauer ermittelt werden kann.

Derzeit ist die Bestimmung des Flächenträgheitsmoments für komplexe Bauteile nur über analytische Annäherungen sowie numerische Lösungen möglich. Analytischen Annäherungen benötigen Referenzgeometrien, wodurch die Genauigkeit sinkt und der Zeitaufwand zur Durchführung der Berechnung steigt. Die Fehler bei der Bestimmung des Flächenträgheitsmoments von komplexen Bauteilen durch analytische Berechnungen kann systembedingt teilweise über 30 % betragen. Auch das Auffinden numerischer Lösungen ist aufgrund der manuellen Auswahl jeder zu betrachtenden Querschnittsebene recht zeitaufwändig, weswegen die Ermittlung in CAD- oder FEM-Programmen dann häufig nur an einzelnen, ausgewählten Stellen durchgeführt wird.

Alternativ bestände auch noch die Möglichkeit einer manuellen Rechnung, die jedoch zweifelsfrei die am zeitintensivsten Lösung darstellen würde.

Mithin existiert aktuell keine Möglichkeit, den Verlauf des Flächenträgheitsmoments von komplexen, geometrisch sich entlang einer Biegeachse signifikant verändernden Bauteilen effizient, d.h. in akzeptabler Zeit und mit hinreichender Genauigkeit zu bestimmen, was auch für andere mechanische Kerngrößen gilt.

Die Aufgabe der Erfindung ist demzufolge die Bereitstellung eines Verfahrens zur rechnerischen Ermittlung und Bereitstellung eines Wertes zumindest eines Parameters, insbesondere des Flächenträgheitsmoments, eines Festkörpers mit hinreichender Genauigkeit und innerhalb akzeptabler Zeit. Weitere Aufgaben sind die Bereitstellung einer Datenverarbeitungsvorrichtung, eines Computerprogrammprodukts und eines Speichermediums dafür.

Die Aufgabe wird durch die in den unabhängigen Ansprüchen angegebenen Merkmale gelöst. Vorteilhafte Weiterbildungen der erfindungsgemäßen Vorrichtung und des Verfahrens sind jeweils Gegenstand abhängiger Unteransprüche sowie der nachfolgenden Beschreibung.

Die Erfindung schlägt im Detail ein computer-implementiertes Verfahren zur rechnerischen Ermittlung und Bereitstellung zumindest eines Wertes zumindest eines Parameters eines Festkörpers vor, wobei das Verfahren folgende Schritte umfasst:

a) Bereitstellen von Daten, die die gesamte bzw. relevante Oberfläche eines Festkörpers in Form einer Vielzahl von aneinander angrenzenden, insbesondere dreieckigen Polygonen vollständig beschreibt, wobei jeder Polygonzug der Vielzahl von Polygonen geschlossen ist und zumindest drei erste Strecken umfasst,

b) Definieren zumindest einer sich durch den Festkörper erstreckenden, virtuellen Betrachtungsebene, für die der Wert des Parameters des Festkörpers ermittelt werden soll,

c) für jede Betrachtungsebene und darin
für jeden Polygonzug, der die betreffende Betrachtungsebene schneidet,
Ermitteln von mindestens einem oder zwei Schnittpunkten der zumindest drei ersten Strecken des Polygonzugs mit der betreffenden Betrachtungsebene,

d) sofern zwei Schnittpunkte vorhanden sind, Ermitteln einer zweiten Strecke zwischen den beiden zum Polygonzug zugehörigen Schnittpunkten,

e) für jeden Schnittpunkt Ermitteln eines Normalenvektors, welcher im Schnittpunkt orthogonal auf dem Polygon steht,

f) für jeden Normalenvektor

f1) Ermitteln der Lage eines Elements einer in der Betrachtungsebene angeordneten Festkörperschicht des Festkörpers anhand einer Projektion des Normalenvektors auf die Betrachtungsebene und/oder
f2) Ermitteln der Lage eines Elements eines in der Betrachtungsebene angeordneten Freiraumschicht um den Festkörpers anhand einer Projektion des Normalenvektors auf die Betrachtungsebene,

g) Ermitteln der vollständigen Festkörperschicht bzw. Freiraumschicht anhand der zweiten Strecken und der bereits ermittelten Elemente, und

h) Ermitteln des Wertes des Parameters des Festkörpers für die Betrachtungsebene anhand der ermittelten Festkörperschicht bzw. Freiraumschicht.

Unter einem Festkörper wird hierbei ein Bauteil verstanden, welches in unterschiedlichen technischen Systemen als Komponente oder Teil einer Komponente verwendet werden kann. So kann es sich beispielsweise bei dem Festkörper um eine Turbinenschaufel einer Gasturbine oder auch um einen Brennerkopf eines Gasturbinen-Brenners, um Bauteile eines Krans, eines Auslegers oder um Rotorblätter von Windturbinen oder ähnlichem handeln, nur um einige mögliche Beispiele zu nennen. Weiter wird unter der Festkörperschicht derjenige Bereich des Festkörpers verstanden, der in einer der Betrachtungsebenen, d. h. Querschnittsebene, liegt und von einem Freiraum, also von Luft umgeben ist. Der Festkörperbereich ist das vom Material des Festkörpers ausgefüllte Volumen, wobei die Festkörperschicht dann den Teil der Betrachtungsebene darstellt, in welcher der Querschnitt des Festkörpers angeordnet ist. Demzufolge ist dann die Freiraumschicht die in Invertierung der Festkörperschicht und gleichzeitig derjenige Teil der Betrachtungsebene, in dem der Querschnitt des Festkörpers nicht angeordnet ist. Wenn nachfolgend von einer Bilddatei die Rede ist, so wird darunter nichts anderes verstanden als eine Datenmenge, die in einem zweidimensionalen Array abspeicherbar und/oder als Bild darstellbar ist. Jedes Element des Arrays wird nachfolgend als Bildelement bezeichnet, welches vorzugsweise zumindest einen Pixel, aber auch mehrere Pixel umfassen und beliebige Werte annehmen kann.

Das aufgezeigte Problem lässt sich mit anderen Worten durch folgende Schritte lösen: Zuerst erfolgt die Bereitstellung von der Oberfläche des Festkörpers beschreibenden Daten. Vorzugsweise ist in den Daten die gesamte Oberfläche des Festkörpers beschrieben. Es ist aber auch möglich, dass die Daten nur die relevante Oberfläche des vom Festkörper zu analysierendem Bestandteil beschreiben. Die Beschreibung der Oberfläche erfolgt in Form einer Vielzahl von aneinander angrenzenden, insbesondere dreieckigen Polygonen, wobei jeder Polygonzug der Vielzahl von Polygonen geschlossen ist und zumindest drei erste Strecken umfasst. Beispielsweise können derartige Daten in STL-Dateien, OFF-Dateien, PLY-Dateien oder auch OBJ-Dateien gespeichert sein. Dann würde die Bereitstellung der Daten lediglich die Bereitstellung derartiger Dateien umfassen.

Anschließend wird zumindest eine Schicht, vorzugsweise mehrere, vorzugsweise äquidistante Schichten, d. h. Betrachtungsebenen, entlang einer Stapelachse definiert. Für jede dieser Betrachtungsebenen soll der Wert des zu ermittelten Parameters gemäß dem nachfolgenden Algorithmus bestimmt werden. Für jeden Polygonzug wird ein Abschnitt der Kante des Festkörpers ermittelt, welcher in der Betrachtungsebene und gleichzeitig in der Polygonfläche liegt. Dieser Kantenabschnitt wird als zweite Strecke bezeichnet. Mithilfe aller derartigen zweiten Strecken kann der Konturumlauf des Festkörpers für die betreffende Betrachtungsebene ermittelt werden, wobei selbst im Inneren des Festkörpers vorhandene Hohlräume dadurch ermittelbar und darstellbar sind. Danach erfolgt die Ermittlung der Festkörperdefinition pro Schicht mithilfe von Normalenvektoren der betreffenden Polygone. Die verwendeten Normalenvektoren für die Ermittlung des in der Betrachtungsebene liegenden Festkörperanteils zeigen von den Endpunkten der zweiten Strecke ins Festkörperinnere. Da regelmäßig die Normalenvektoren in den Festkörperbereich zeigen, sind diese auf die relevante Betrachtungsebene zu projizieren, um davon weitere Elemente der Festkörperschicht abzuleiten.

Zur Berechnung und Speicherung der Daten, mit denen die in der virtuellen Betrachtungsebene liegende Festkörperschicht des Festkörpers ermittelt werden kann, wird eine Bilddatei bereitgestellt. Anfänglich enthalten alle Bildelemente, vorzugsweise Pixel, der Bilddatei die gleichen identischen Werte. Mit anderen Worten: die Bilddatei ist leer. Die für die Kantenabschnitte, d.h. die für die zweite Strecken ermittelten Koordinaten werden in der Bilddatei abgespeichert, indem alle von der betreffenden Kante überdeckten Bildelemente, insbesondere Pixel, eingefärbt werden. Alle Kantenabschnitte zeigen dann in der Bilddatei die Querschnittskontur des Festkörpers. Mithilfe der Normalenvektoren, die von der Oberfläche des Festkörpers, oder genauer gesagt, von der Polygonfläche senkrecht in das Festkörperinnere zeigen, und insbesondere mithilfe ihrer Projektionen auf die Betrachtungsebene, können innerhalb der Querschnittskontur liegende Bildelemente ebenfalls eingefärbt werden, sodass in der Bilddatei neben der Querschnittskontur des Festkörpers auch einzelne Punkte der Festkörperschicht identifiziert und abgespeichert sind. Anschließend erfolgt das Ausfüllen der von der Querschnittskontur des Festkörpers umschlossenen Bildelemente mit der gleichen Farbe wie die Bildelemente, die mittels der Normalenvektoren ermittelt wurden. Dank einer so erstellten Bilddatei ist die vollständige Querschnittskontur der Festkörperschicht für die relevante Betrachtungsebene ermittelt, woraus sich anschließend unter Anwendung bekannter Algorithmen die Werte unterschiedlicher Parameter, d.h. mechanische Kenngrößen, des Festkörpers für die relevante Betrachtungsebene ermitteln lassen. Wenn beispielsweise das in der Betrachtungsebene liegende Flächenträgheitsmoment des Festkörpers ermittelt werden soll, so kann dies mithilfe des Steineranteils erfolgen.

Die vorangegangene Beschreibung der Erfindung erfolgte anhand von Normalenvektoren, die von der Oberfläche des Festkörpers in das Innere des Festkörpers zeigen. Insofern wurde der Festkörperbereich gemäß Schritt f1) ermittelt. Gemäß eines dazu alternativen Verfahrens, bei dem der Schritt f2) Anwendung findet, wird mithilfe der Normalenvektoren nicht der Festkörperbereich bzw. die Festkörperschicht ermittelt, sondern der Freiraum um die Festkörperschicht herum, um dann erst in Schritt h) durch Invertierung der Freiraumschicht zur Festkörperschicht und anschließend zu dem Wert des Parameters zu gelangen. Dabei ist es möglich, die Verfahrensschritte gemäß f1) und f2) auch gleichzeitig zu verwenden, insbesondere, um die Ergebnisse des jeweils anderen Verfahrens wechselseitig zu plausibilisieren.

Mit Hilfe dieser Lösungen kann beispielsweise das Flächenträgheitsmoment innerhalb kurzer Zeit an jeder Stelle des Festkörpers bei höher gewählter Auflösung mit einem sehr geringen Fehler innerhalb akzeptabler Zeiten bestimmt werden. Tests ergaben, dass beispielsweise die Berechnung des Flächenträgheitsmoments eines etwa 10cm langen Brennerkopfes einer Gasturbine entlang seiner axiale Erstreckung bei einer Abstandsweite von 0,05 mm zwischen zwei der dann insgesamt 2000 Betrachtungsebenen innerhalb von etwa 1,5 Stunden erfolge kann. Und dies bei Nutzung eines konventionellen Computers und ohne, dass das Computerprogramm auf Schnelligkeit hin optimiert wurde. Dies ist signifikant schneller im Vergleich zu konventionellen Methoden, wobei gleichzeitig eine weiter verbesserte Genauigkeit erreichbar ist.

Es sei bemerkt, dass die in den Schritte c) bis g) angegebenen Maßnahmen nicht zwingend in der angegebenen Reihenfolge durchzuführen sind. Selbstverständlich ist es möglich, zuerst alle zweiten Strecken zu bestimmen, bevor die Normalenvektoren ermittelt und in die Betrachtungsebene projiziert werden.

Gemäß einer ersten vorteilhaften Ausgestaltung der Erfindung wird eine Vielzahl von zueinander parallelen, entlang einer Stapelachse aufeinanderfolgenden Betrachtungsebenen definiert, wobei die Betrachtungsebenen vorzugsweise äquidistant angeordnet sind und wobei die Größe des Parameters für jede Betrachtungsebene der Vielzahl von Betrachtungsebenen anhand der Schritte c) - h) ermittelt wird.

Nach einer besonders vorteilhaften Weiterbildung wird die Größe des Parameters zwischen unmittelbar aufeinander folgenden Betrachtungsebenen mittels einer linearen Interpolation ermittelt.

Somit kann die Erfindung in vorteilhafter Weise auch für derartige Parameter angewendet werden, deren Werte sich entlang der Stapelachse der Betrachtungsebenen, d.h. Querschnittsebenen, des Festkörpers variieren. Zur Ermittlung einer kontinuierlichen Kurve für die Werte des zu erfassenden Parameters zwischen zwei unmittelbar benachbarten Betrachtungsebenen bietet es sich an, die dazwischen liegenden Werte zu interpolieren, beispielsweise durch eine lineare Funktion oder durch die Verwendung einer Spline-Funktion.

Das vorteilhafte Merkmal, dass die ermittelten Werte als Kurve in einem Diagramm abgespeichert und/oder dargestellt werden, erlaubt zweckmäßigerweise die Bereitstellung der Werte in einfacher Art und Weise für weitere Prozess- und/oder Bearbeitungsschritte oder für die Analyse durch einen Nutzer.

In einer vorteilhaften Ausgestaltung der Erfindung können die Normalenvektoren vor Verwendung in Schritt f) normiert, skaliert und/oder invertiert werden.

Dank der Normierung der Normalenvektoren kann der maximale Betrag der Normalenvektoren limitiert werden, was in nachfolgenden Schritten die Ermittlung der vollständigen Festkörperschicht erleichtert. Eine Skalierung verhindert Verweise der Normalenvektoren auf Bereiche, die außerhalb des Festkörperbereichs liegen. Fehlerhafte Berechnungen werden folglich dadurch verhindert. Sofern die Bereitstellung der Daten bezüglich der Oberflächenstruktur des Festkörpers durch STL-Dateien erfolgt, sind die darin enthaltenen Normalenvektoren zu invertieren, da die STL-Normalenvektoren definitionsgemäß von der Oberfläche weg nach außen zeigen.

Gemäß eines vorteilhaften Vorschlags werden die zweiten Strecken zu zumindest einer äußeren Querschnittskontur des Festkörpers, und bei hohlen Festkörpern auch zu einer oder mehreren inneren Querschnittskonturen des Festkörpers zusammengefasst, was Fehler beim Ausfüllen der Festkörperschicht vermeidet.

Nach einer weiteren vorteilhaften Ausgestaltung umfasst das Verfahren einen zusätzlich Überprüfungsschritt: Sofern sich von einem der Schnittpunkte aus sich zwei zweite Strecken erstrecken, schließen die beiden zweiten Strecken einen in der Betrachtungsebene liegenden Neigungswinkel ein, dessen Größe ermittelt wird, wobei, wenn der Neigungswinkel kleiner 90° beträgt, dann die Schritte e), f) bzw. g) übersprungen, d.h. ausgelassen, werden. Diese vorteilhafte Ausgestaltung ermöglicht die fehlerfreie Analyse selbst solcher Festkörpergeometrien, bei denen die Oberfläche eine lokal spitzwinkelige Geometrie aufweisen. Ohne einen derartigen Überprüfungsschritt könnten bei solchen Geometrien von Festkörpern Berechnungsfehler dadurch auftreten, dass der in den Festkörperbereich weisende Normalenvektor eine solche Größe aufweist, dass dieser über die andere der beiden zweite Strecke aus dem Festkörperbereich hinaus zeigt.

Weiter bevorzugt werden die ermittelten Ergebnisse als 2-dimensionales Bild, d.h. in einer Bilddatei gespeichert und/oder von einer visuellen Wiedergabe-Einheit dargestellt, welches sich aus einer Vielzahl von in einem Raster angeordneten rechteckigen oder quadratischen Bildelementen, vorzugsweise Pixeln, zusammensetzt, wobei vorzugsweise diejenigen Bildelemente, mittels denen die zweiten Strecken und die davon umschlossene Festkörperschicht dargestellt werden, sich von den restlichen Bildelementen des Bildes unterscheiden.

Diese Art der Datenspeicherung ermöglicht die einfache Durchführung des erfindungsgemäßen Verfahrens auf einem Computer.

Weiter bevorzugt repräsentiert der Parameter eine in der Betrachtungsebene liegende Querschnittsfläche, ein in der Betrachtungsebene liegendes Flächenträgheitsmoment, ein in der Betrachtungsebene liegender Flächenschwerpunkt, ein in der Betrachtungsebene liegendes Widerstandsmoment, ein in der Betrachtungsebene liegender Flächenträgheitsradius, ein in der Betrachtungsebene liegende Flächensteifigkeit oder ein Volumen des Festkörpers, wobei gleichzeitig für mehrere dieser Parameter die Werte ermittelt werden können. Insofern lassen sich mithilfe des erfindungsgemäßen Verfahrens eine Vielzahl unterschiedlicher mechanischer Eigenschaften des Festkörpers simultan und in äußerst effizienter Art und Weise ermitteln.

Eine weitere Möglichkeit ist die schnelle und kostengünstige Ermittlung des Flächenträgheitsmoments von beispielsweise Turbinenschaufeln oder Rotorblättern von Windturbinen. Dies kann dann für nachfolgende Struktursimulationen behilflich sein. Ebenfalls besteht die Möglichkeit zur Einbindung der Werte bzw. Kurven in weitere CAD-CAM Prozesse. So könnte mithilfe des Verfahrens auch eine durchströmbare Querschnittsfläche des Festkörpers bestimmt werden. Diese wird beispielsweise für die optimale Auslegung der Kühlluftströmung von Turbinenschaufeln benötigt. Insofern können die Ergebnisse des Verfahrens vielfach Anwendung finden.

Wenn der Parameter ein in der Betrachtungsebene liegendes Flächenträgheitsmoment des Festkörpers ist, kann in Schritt h) unter Anwendung des Satzes von Steiner dieses aus der Festkörperschicht in Bezug auf eine vorbestimmte, beliebige Achse, welche orthogonal zur Betrachtungsebene steht, ermittelt werden.

Hiermit lässt sich in einfacher Art und Weise das in der Betrachtungsebene der liegende Flächenträgheitsmoment des Festkörpers rechnerisch ermitteln.

Gemäß einem vorteilhaften Vorschlag werden für die betreffende Betrachtungsebene

- die Größe der Gesamtquerschnittsfläche der Festkörperschicht und/oder
- die Lage des Flächenschwerpunkts der Festkörperschicht ermittelt,

wobei für jedes Element der Festkörperschicht die Größe des Flächenträgheitsmoments in Bezug auf die vorbestimmte Achse ermittelt wird, was nicht anders darstellt als die konkrete Umsetzung des Satzes von Steiner.

Des Weiteren wird ein Computerprogrammprodukt mit Programmbefehlen zur Durchführung des genannten erfindungsgemäßen Verfahrens beansprucht, wobei mittels des Computerprogrammprodukts das erfindungsgemäße Verfahren oder eine vorteilhafte Weiterbildung durchführbar ist.

Weiter bevorzugt ist eine Vorrichtung zur Datenverarbeitung vorgesehen, umfassend Mittel zur Ausführung der Schritte des erfindungsgemäßen Verfahrens oder einer vorteilhaften Weiterbildung.

Des Weiteren wird ein Computerprogrammprodukt mit Programmbefehlen zur Durchführung der genannten erfindungsgemäßen Verfahren beansprucht, wobei mittels des Computerprogrammprodukts das erfindungsgemäße Verfahren oder einer vorteilhaften Weiterbildung dessen durchführbar ist.

Weiter bevorzugt ist ein computerlesbares Speichermedium vorgesehen, umfassend Befehle, die bei der Ausführung durch einen Computer diesen veranlassen, das erfindungsgemäße Verfahren oder eine vorteilhafte Weiterbildung dessen auszuführen. Bevorzugtermaßen handelt es sich bei dem Speichermedium um einen nicht-flüchtigen Computerspeicher, eine Compact Disc, ein USB-Speichergerät, einen Cloud-Speicher oder dergleichen, in dem das Computerprogramm dauerhaft gespeichert ist.

Gemäß einer besonders bevorzugten Ausgestaltung wird ein Satz von Werten eines Parameters, der mittels der Durchführung des erfindungsgemäßen Verfahrens oder seiner bevorzugten Varianten ermittelt wurde, nachfolgenden Berechnungsschritten bereitgestellt.

Die bisherige Beschreibung vorteilhafter Ausgestaltungen der Erfindung enthält zahlreiche Merkmale, die in den einzelnen Unteransprüchen teilweise zu einer Einheit zusammengefasst wiedergegeben sind. Diese Merkmale können jedoch zweckmäßigerweise auch einzeln betrachtet und zu weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung kombinierbar. So sind etwa auch Verfahrensmerkmale, gegenständlich formuliert, auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden verständlich im Zusammenhang mit der folgenden Beschreibung der Ausführungsbeispiele anhand der nachfolgenden Figuren näher erläutert.

Hierbei sind die Figuren lediglich schematisch dargestellt, wodurch insbesondere keine Einschränkung der Ausführbarkeit der Erfindung die Folge ist. Es zeigen:

Figur 1    beispielhaft einen Festkörper in Form eines Drallerzeugers eines Gasturbinen-Brenners, für den ein oder mehrere Werte eines Parameters rechnerisch ermittelt werden soll,

Figur 2    die Positionen von mehreren, zueinander beabstandeten Betrachtungsebenen des Festkörpers,

Figur 3    schematisch das Vorgehen zur Ermittlung der Projektion eines Normalenvektors auf eine der Betrachtungsebenen,

Figur 4    eine der Betrachtungsebenen aus Figur 2 mit der in der Betrachtungsebene liegenden Querschnittskontur des Festkörpers,

Figur 5    eine ausgefüllte Festkörperschicht der in der Figur 4 gezeigten Querschnittskontur des Festkörpers,

Figur 6    die Berechnung des Flächenträgheitsmoments für die in Figur 5 dargestellte Festkörperschicht anhand des Satzes von Steiner,

Figur 7    das Flächenträgheitsmoment des in Figur 1 dargestellten Festkörpers als Funktion der axialen Position und

Figur 8    in schematischer Darstellung ein Flussdiagramm zur Durchführung des erfindungsgemäßen Verfahrens.

In den Figuren sind gleiche Elemente mit gleichen Bezugszeichen versehen.

Nachfolgend wird das erfindungsgemäße computer-implementierte Verfahren zur rechnerischen Ermittlung und Bereitstellung eines Wertes zumindest eines Parameters eines Festkörpers anhand eines Ausführungsbeispiels näher erläutert.

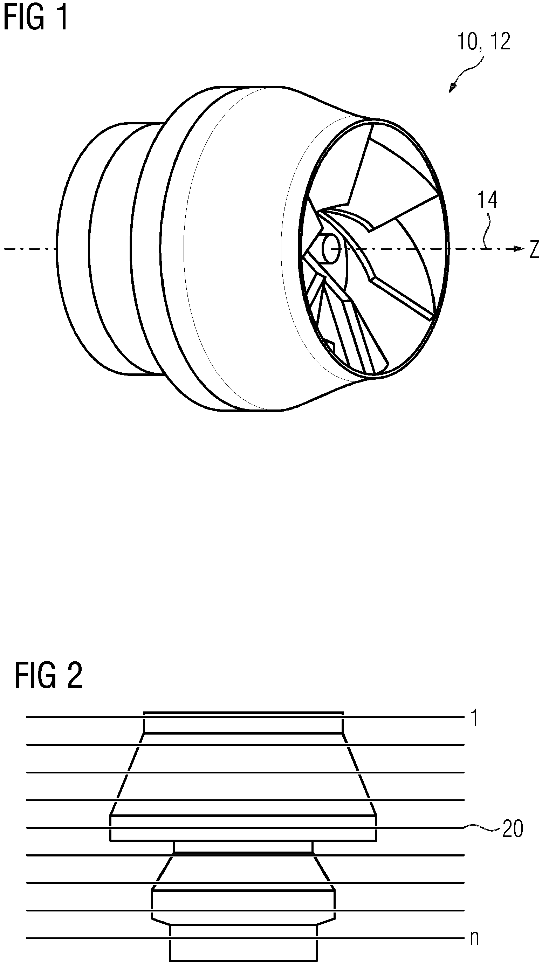

Im nachfolgenden beschriebenen Ausführungsbeispiel ist gemäß Figur 1 der Festkörper 10 als Drallerzeuger 12 eines nicht weiter dargestellten Gasturbinenbrenners ausgestaltet, welcher entlang seiner Maschinenachse 14, d. h in Z-Richtung, unterschiedlichste Querschnittskonturen aufweist. Mithilfe des computer-implementierten Verfahrens ist es möglich, für eine beliebige Betrachtungsebene und insbesondere für eine Vielzahl von Betrachtungsebenen die jeweils in der betreffenden Betrachtungsebene liegende mechanische Eigenschaft, nachfolgend Parameter 16 genannt, rechnerisch in vergleichsweise kurzer Zeit mit hinreichend großer Genauigkeit zu ermitteln.

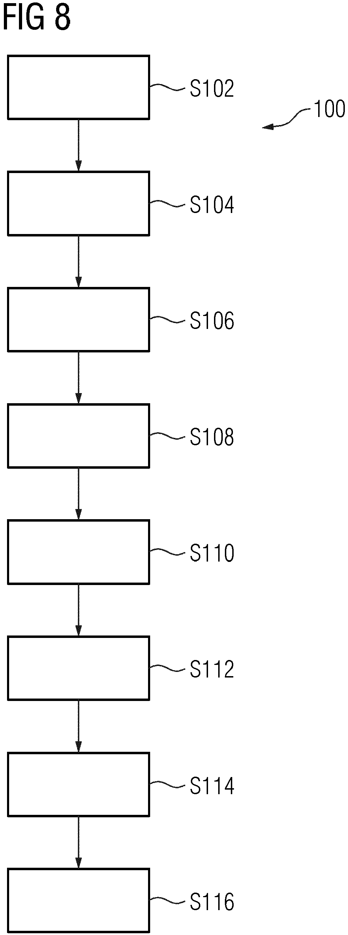

Das Ausführungsbeispiel erläutert beispielhaft das computer-implementierte Verfahren 100 (Figur 8) anhand der Ermittlung des Flächenträgheitsmoments für die ausgewählte Betrachtungsebene 20, welche gemäß Figur 2 die dritte Betrachtungsebene 20 von insgesamt n Betrachtungsebenen darstellt. Das Verfahren ermöglicht tatsächlich die Verwendung einer vergleichsweise hohen Anzahl an Betrachtungsebenen. Es besteht sogar die Möglichkeit die Anzahl der Betrachtungsebenen so groß zu wählen, dass jede Betrachtungsebene die Dicke einer Schicht eines SLM-Prozessschritts repräsentiert. Mit anderen Worten: der Abstand zwischen zwei unmittelbar benachbarten Betrachtungsebenen kann in etwa der Schichtdicke eines per selektiven Laserschmelzen (SLM) hergestellten Bauteils entsprechen.

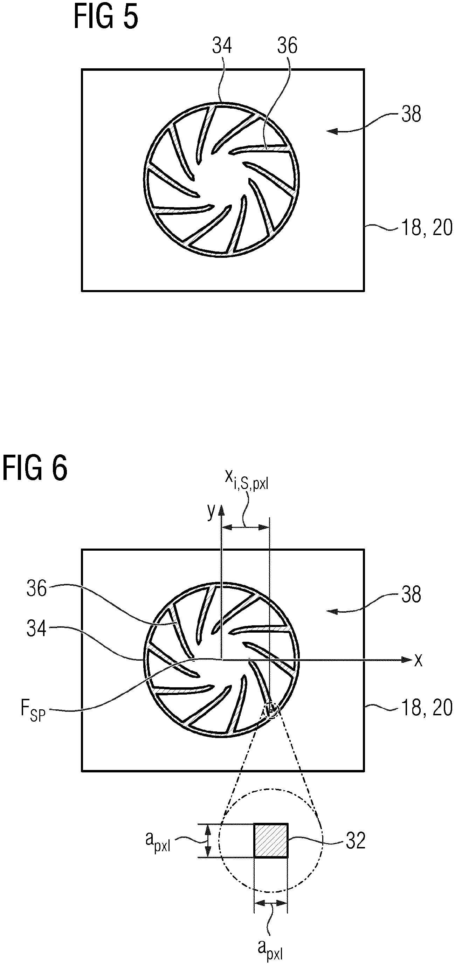

Mit dem Verfahren 100 ist es möglich, für jede Betrachtungsebene 20 in eine anfänglich leere Bilddatei 18 die in der jeweiligen Betrachtungsebene 20 liegende Querschnittskontur des Drallerzeugers 12 zu zeichnen und abzuspeichern sowie anschließend diese Querschnittskontur zu einer Festkörperschicht 36 (Figur 5) des Drallerzeugers 12 auszufüllen. Die Bilddatei 18 ist beispielsweise ein 2-dimensionales Array von Bildelementen, mit einer Größe gleich der Anzahl an Spalten multipliziert mit der Anzahl an Reihen, wobei die Bildelemente beliebige Zahlenwerte annehmen können. Eine Bilddatei kann ohne Weiteres eine Auflösung von 1200x1200 Bildelementen oder mehr aufweisen.

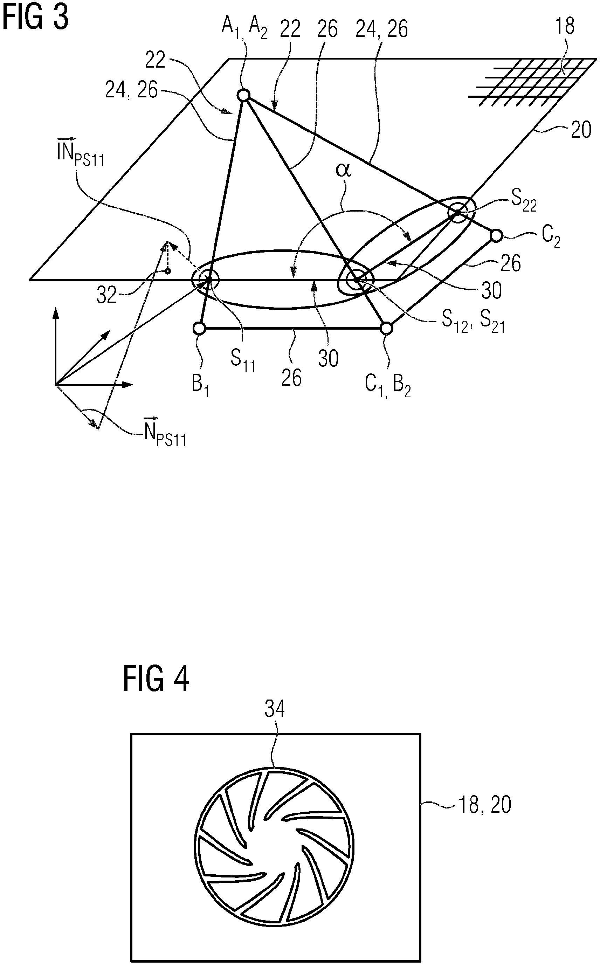

In einem ersten Verfahrensschritt S102 werden die Daten, die die gesamte bzw. relevante Oberfläche des Drallerzeugers 12 repräsentieren, bereitgestellt. Üblicherweise erfolgt die Bereitstellung der Daten in Form einer computerlesbaren Datei, beispielsweise in Form einer STL-Datei, die von gängigen CAD-Systemen ausgeleitet werden kann. Die Daten beschreiben die Oberfläche mithilfe einer großen Anzahl von aneinander angrenzenden Polygonen 22, wobei jeder zugehörigen Polygonzug 24 geschlossen ist. Gemäß dem in Figur 3 gezeigten Ausführungsbeispiel sind die Polygone als Dreiecke mit den Eckpunkten A, B und C ausgestaltet. Es sind lediglich zwei Dreiecke $A_1B_1C_1$ und $A_2B_2C_2$ exemplarisch dargestellt, wobei die Punkte $A_1$ und $A_2$ der beiden Dreiecke deckungsgleich sind. Sind die Polygone 22 als Dreiecke ausgestaltet, umfasst jeder Polygonzug drei erste Strecken 26: $\overline{A_1B_1}$, $\overline{B_1C_1}$, $\overline{C_1A_1}$ und $\overline{A_2B_2}$, $\overline{B_2C_2}$, $\overline{C_2A_2}$. Sind die Polygone 22 jedoch beispielsweise als Pentagon ausgestaltet, umfasst jedes diese 5-eckigen Polygone somit fünf erste Strecken 26.

Nach dem Bereitstellen der Daten im ersten Verfahrensschritt S102 ist in einem zweiten Verfahrensschritt S104 (Figur 8) die Position der zumindest einen, vorzugsweise mehreren Betrachtungsebenen 20 vom Nutzer des computer-implementierten Verfahrens festzulegen. Die Betrachtungsebenen 20 sind äquidistant sowie parallel zueinander entlang einer Stapelachse angeordnet, die gemäß diesem Ausführungsbeispiel mit der Maschinenachse 14 zusammenfällt. Im in Figur 3 dargestellten Ausführungsbeispiel schneidet die Betrachtungsebene 20 die beiden Polygone 22, sodass in einem dritten Verfahrensschritt S106 Schnittpunkte S der ersten Strecken 26 der Polygonzüge 24 mit der Betrachtungsebene 20 ermittelt werden können: für das erste Polygon $A_1B_1C_1$ können die Schnittpunkte $S_{11}$ und $S_{12}$ und für das zweite Polygon $A_2B_2C_2$ die Schnittpunkte $S_{21}$ und $S_{22}$ ermittelt werden. Die Schnittpunkte $S_{12}$ und $S_{21}$ sind deckungsgleich. Für den Sonderfall, dass nur einer der Eckpunkte der Polygone 22 in der Betrachtungsebene 20 liegt und keine zweite Strecke die Betrachtungsebene schneidet, können für dieses Polygon nicht zwei Schnittpunkte, sondern nur ein Schnittpunkt S je Polygon ermittelt werden. Ein weiterer Sonderfall liegt vor, wenn eine der ersten Strecken 26 vollständig in der Betrachtungsebene 20 liegt. Dann existiert zwar eine unendliche Anzahl an Schnittpunkten, im Verfahren werden jedoch nur die beiden Endpunkte der betreffenden ersten Strecke als Schnittpunkte verwendet.

Anschließend wird in einem vierten Verfahrensschritt S108 für jeden Polygonzug, und sofern zwei Schnittpunkte S ermittelt wurden, eine zweite Strecke 30, im besagten Ausführungsbeispiel die beiden Strecken $\overline{S_{11}S_{12}}$ und $\overline{S_{21}S_{22}}$, ermittelt. Jede zweite Strecke 30 repräsentiert einen Teil der äußeren Kante des Drallerzeugers 12, welche in der betreffenden Betrachtungsebene 20 liegt. Die Schnittpunkte S und die zweiten Strecken 30 werden in der betreffenden Bilddatei 18 abgespeichert. Alsbald alle zweiten Strecken 30 ermittelt wurden, enthält die Bilddatei Daten, welche die Querschnittkontur 34 des Drallerzeugers 12 vollständig beschreiben, wie beispielhaft in Figur 4 dargestellt. Es ist anzumerken, dass insbesondere bei hohlen Festkörpern auch zweite Strecken 30 zu einer oder mehreren inneren Querschnittskonturen zusammengefasst werden können.

In einem fünften Verfahrensschritt S110 wird für jeden Schnittpunkt S ein Normalenvektor $\vec{N}_P$ ermittelt. Beispielsweise kann der Normalenvektor $\vec{N}_P$ für jedes Polygon bereits in den anfänglich bereitgestellten Daten enthalten sein, was beispielsweise bei STL-Dateien der Fall ist. Der Normalenvektor $\vec{N}_P$ steht orthogonal auf der ebenen Polygonfläche des betreffenden Polygon 24. Weist er beispielsweise, wie in den STL-Daten, nach außen, d. h. aus dem Festkörperbereich des Drallerzeugers 12 heraus, ist er zu invertieren, damit er in den Festkörperbereich des Drallerzeugers 12 zeigt. Aus Gründen der Übersichtlichkeit ist in Figur 3 der nach außen weisende Normalenvektor $\vec{N}_{PS11}$ des Schnittpunktes $S_{11}$ separat im Ursprung eines kartesischen Koordinatensystems dargestellt. Der in das Festkörperinnere weisende, d. h. invertierte Normalenvektor $\vec{IN}_{PS11}$ für den Schnittpunkt $S_{11}$ entspringt dagegen verfahrenskonform im Schnittpunkt $S_{11}$.

In einem nächsten Verfahrensschritt S112 erfolgt die Projektion des ins Festkörperinnere weisenden Normalenvektors $\vec{IN}_{PS11}$ auf die Betrachtungsebene 20, sodass hierdurch die Lage eines zur Festkörperschicht 36 gehörendes Bildelements 32 ermittelbar ist. Für jeden Schnittpunkt S jedes Polygons 24 werden die entsprechenden Normalenvektoren bzw. invertierten Normalenvektoren ermittelt sowie deren Projektionen auf die Betrachtungsebene 20, um daraus für jeden Schnittpunkt S die Lage eines dazu gehörigen Bildelements 32 zu ermitteln, welcher im Inneren des Drallerzeugers 12 angeordnet ist. Die so ermittelten Bildelemente, in der Regel ein Bildpixel, erhalten dann einen Wert, der das Innere des Drallerzeugers 12 repräsentiert. Um zu vermeiden, dass die Normalenvektoren bzw. die invertierten Normalenvektoren über zweite Strecken 30 eines benachbarten Polygons aus dem Festkörperbereich hinaus zeigen, kann die Größe der besagten Vektoren normiert und/oder skaliert werden.

Sofern erforderlich, kann ein in der Betrachtungsebene 20 erfasster Neigungswinkel α zwischen zwei zweite Strecken 30, die einen gemeinsamen Anfangs- bzw. Endpunkt aufweisen, ermittelt werden. Sollte der Neigungswinkel α spitzwinklig sein, so kann auf die Ermittlung des Normalenvektors und des daraus schlussendlich ermittelten Bildelements 32 verzichtet werden.

Nachdem alle zu einer Querschnittskontur 34 zugehörigen zweiten Strecken 30 und die Lage von einer Vielzahl im Inneren angeordneten Bildelementen ermittelt wurden, kann die vom ersteren eingegrenzte Festkörperschicht 36 des Drallerzeugers 12 in einen weiteren Verfahrensschritt S114 mithilfe eines einfachen Ausfüll-Algorithmus vollständig ermittelt, d.h. eingefärbt werden. Dazu können beispielsweise diejenigen Bildelemente, die nach Abschluss aller Projektionen noch ihren ursprünglichen Wert aufweisen, jedoch unmittelbar neben einem als bereits zum Inneren gehörenden Bildelement gekennzeichnet sind, den gleichen Wert zugeordnet bekommen wie die bereits gekennzeichneten Nachbar-Bildelemente. Mithilfe eines derartig einfachen Algorithmus kann die in der betreffenden Betrachtungsebene 20 angenommene Festkörperschicht 36 anhand der zweiten Strecken 30 und der bereits ermittelten Bildelemente 32 vervollständigt und eingefärbt werden, ohne dass Verwechselungen zwischen Innen und Außen, d.h. zwischen dem Festkörperbereich und seiner Umgebung, auftreten.

Anschließend kann in einem letzten Verfahrensschritt S116 der Wert für den betrachteten Parameter ermittelt werden. Beispielsweise kann dann anhand der Bilddatei, so wie sie in Figur 5 dargestellt ist, auch die Größe des von einem Medium durchströmbaren Querschnitts ermittelt werden.

Die vorangegangene Beschreibung des Ausführungsbeispiels erfolgte anhand von Normalenvektoren, die von der Oberfläche des Festkörpers in das Innere des Festkörpers 10 zeigen. Insofern wurde der Festkörperbereich gemäß Schritt f1) ermittelt. Gemäß eines dazu alternativen Verfahrens, bei dem der Schritt f2) Anwendung findet, wird mithilfe der Normalenvektoren nicht Elemente der Festkörperschicht ermittelt, sondern Elemente eines Freiraums um die Festkörperschicht 36 herum. Hierzu weisen die auf die Betrachtungsebene 20 projizierten Normalenvektoren orthogonal von der Polygonfläche nach außen, d. h. in den Freiraum, sodass mit diesen Normalenvektoren Elemente einer Freiraumschicht 38 ermittelt werden. Nach dem Ausfüllen der Freikörperschicht 38 stellt dann der dazu inverse Bereich die Festkörperschicht 36 dar, für die anschließend der Wert des Parameters ermittelt werden kann.

Wenn beide Berechnungsmethoden gemäß f1) und f2) gleichzeitig verwendet werden, können die jeweiligen Ergebnisse beispielsweise durch Subtraktion miteinander verglichen werden, um etwaige Fehler, beispielsweise in den bereitgestellten Festkörper-Daten, auffinden zu können.

Für den Fall, dass im letzten Verfahrensschritt S116 das Flächenträgheitsmoment ermittelt wird, kann dies mithilfe des Satzes von Steiner erfolgen. Ausgehend von der in Figur 6 dargestellten Bilddatei 18 kann mithilfe der einzelnen farbigen Bildelemente 32, insbesondere Pixeln, das Flächenträgheitsmoment mittels des Satzes von Steiner aufsummiert werden. Dazu wird zuerst die Gesamt-Querschnittsfläche pro Festkörperschicht über die Summe der einzelnen Pixelflächen berechnet, wobei die Bildelementgröße anhand ihrer skalierten Kantenlängen $a_{pxl}$ ermittelt werden kann. Anschließend ist ein Flächenschwerpunkt $F_{SP}$ der betreffenden Festkörperschicht zu bestimmen. Weiter beschreibt in Figur 6 $x_{i,s,pxl}$ den horizontalen Abstand des i-ten Bildelements 32 zum Flächenschwerpunkt $F_{SP}$ des gezeigten Querschnitts, wenn eine Verformung des Festkörpers in X-Richtung aufgrund einer entsprechend gerichteten Krafteinwirkung zu untersuchen ist. Dann erfolgt die Berechnung des Flächenträgheitsmoments $I_{i,pxl}$ und der Fläche $A_{i,pxl}$ gemäß den Gleichungen (1) und (2):

$$I_{i,pxl} = \frac{a_{pxl}^4}{12} \qquad\qquad (1)$$

$$A_{i,pxl} = a_{pxl}^2 \qquad\qquad (2)$$

Weiterhin beschreibt die Gleichung (3) das gesamte axiale Flächenträgheitsmoment $I_{FK\text{-Schicht}}$ der betreffenden Festkörperschicht um die Y-Achse,

$$I_{FK-Schicht} = \sum_i (I_{i,pxl} + x_{i,S,pxl}^2 \cdot A_{i,pxl}) \qquad\qquad (3)$$

wobei die gesamte Querschnittsfläche $A_{FK\text{-Schicht}}$ der betreffenden Festkörperschicht nach Gleichung (4) ermittelt werden kann.

$$A_{FK-Schicht} = \sum_i A_{i,pxl} \qquad\qquad (4)$$

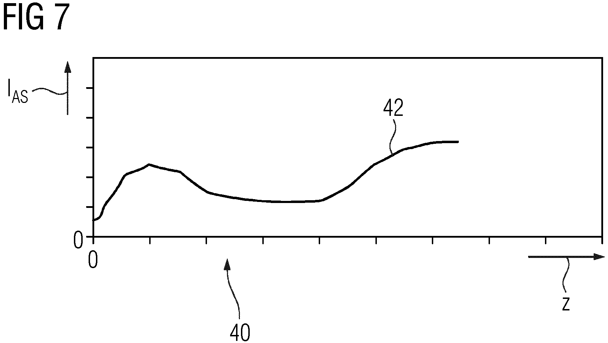

Figur 7 zeigt das Flächenträgheitsmoment des Drallerzeugers 12 entlang seiner Maschinenachse 14, d.h. in Z-Richtung, in einem Diagramm 40 als Kurve 42.
Auch wenn die Erfindung anhand eines rotationssymmetrischen Festkörpers 10 beispielhaft erklärt wurde, so ist die Nutzung des Verfahrens 100 nicht auf derartige Festkörper eingeschränkt. Das Verfahren 100 ist auch für solche Festkörper geeignet, die rotationsunsymmetrisch ausgestaltet sind.
Sofern erforderlich, können die Ergebnisse in einer Text-Datei für die anschließende Weiterverarbeitung gespeichert werden.
Insgesamt betrifft die Erfindung ein Verfahren zur rechnerischen Ermittlung eines Wertes eines Parameters eines Festkörpers, mit den Schritten:

a) Bereitstellen (S102) von Daten, die die Oberfläche eines Festkörpers 10 in Polygonen 22 beschreiben,
b) Definieren (S104) zumindest einer sich durch den Festkörper erstreckenden, virtuellen Betrachtungsebene 20, für die der Wert des Parameters des Festkörpers ermittelt werden soll,
c) für jeden Polygonzug 22, der die Betrachtungsebene 20 schneidet Ermitteln (S106) von Schnittpunkten S des Polygonzugs 24 mit der Betrachtungsebene 20,
d) Ermitteln (S108) einer zweiten Strecke 30 zwischen den Schnittpunkten S,
e) für jeden Schnittpunkt S Ermitteln (S110) eines Normalenvektors, welcher orthogonal auf dem Polygon 22 steht und ins Festkörperinnere zeigt,
f) für jeden Normalenvektor Ermitteln (S112) der Lage eines Elements 32 einer in der Betrachtungsebene angeordneten Festkörperschicht 36 des Festkörpers 10,
g) Ermitteln (S114) der vollständigen Festkörperschicht, und
h) Ermitteln (S116) des Wertes des Parameters.

Damit ist es möglich, selbst bei komplexen Geometrien, wie u.a. Turbinenschaufeln mit inneren Kühlstrukturen, oder dergleichen, mechanische Eigenschaften für jeden beliebigen Querschnitt des Bauteils schnell und exakt zu bestimmen.

**Patentansprüche**

1. Computer-implementiertes Verfahren (100) zur rechnerischen Ermittlung und Bereitstellung zumindest eines Wertes zumindest eines Parameters eines Festkörpers (10), wobei das Verfahren folgende Schritte umfasst:

a) Bereitstellen (S102) von Daten, die die Oberfläche eines Festkörpers (10) in Form einer Vielzahl von aneinander angrenzenden, insbesondere dreieckigen Polygonen (22) beschreibt, wobei jeder Polygonzug (24) geschlossen ist und zumindest drei erste Strecken (26) umfasst,

b) Definieren (S104) zumindest einer sich durch den Festkörper erstreckenden, virtuellen Betrachtungsebene (20), für die der Wert des Parameters des Festkörpers ermittelt werden soll,

c) für jede Betrachtungsebene (20)

für jeden Polygonzug (22), der die Betrachtungsebene (20) schneidet,

Ermitteln (S106) von einem oder zwei Schnittpunkten (S) der ersten Strecken (26) des Polygonzugs (24) mit der Betrachtungsebene (20),

d) Ermitteln (S108) einer zweiten Strecke (30) zwischen den beiden zum Polygonzug (24) zugehörigen Schnittpunkten (S),

e) für jeden Schnittpunkt (S)

Ermitteln (S110) eines Normalenvektors, welcher im Schnittpunkt (S) orthogonal auf dem Polygon (22) steht,

f) für jeden Normalenvektor

    f1) Ermitteln (S112) der Lage eines Elements (32) einer in der Betrachtungsebene angeordneten Festkörperschicht (36) des Festkörpers (10) anhand einer Projektion des Normalenvektors auf die Betrachtungsebene (20) und/oder

    f2) Ermitteln (S112) der Lage eines Elements (37) eines in der Betrachtungsebene angeordneten Freiraumschicht (38) um den Festkörpers (10) anhand einer Projektion des Normalenvektors auf die Betrachtungsebene (20),

    g) Ermitteln (S114) der vollständigen Festkörperschicht bzw. Freiraumschicht anhand der zweiten Strecken und der bereits ermittelten Elemente, und

    h) Ermitteln (S116) des Wertes des Parameters des Festkörpers für die Betrachtungsebene anhand der ermittelten Festkörperschicht bzw. Freiraumschicht.

2. Verfahren (100) nach Anspruch 1,
bei dem eine Vielzahl von zueinander parallelen, entlang einer Stapelachse aufeinanderfolgenden Betrachtungsebenen (20) definiert wird, welche vorzugsweise äquidistant angeordnet sind, und
bei dem die Größe des Parameters für jede Betrachtungsebene der Vielzahl von Betrachtungsebenen (20) anhand der Schritte c) - h) ermittelt wird.

3. Verfahren (100) nach Anspruch 2,
bei dem die Größe des Parameters zwischen unmittelbar aufeinander folgenden Betrachtungsebenen mittels einer linearen Interpolation ermittelt wird.

4. Verfahren (100) nach einem der Ansprüche 2 oder 3,
bei dem die ermittelten Werte als Kurve (42) in einem Diagramm (40) abgespeichert und/oder dargestellt werden.

5. Verfahren (100) nach einem der vorangehenden Ansprüche,
bei dem die Normalenvektoren $\overline{IN}_{PS11}$ vor Verwendung in Schritt f) normiert, skaliert und/oder invertiert werden.

6. Verfahren (100) nach einem der vorangehenden Ansprüche,
bei dem die zweiten Strecken (26) zu zumindest einer äußeren Querschnittskontur (34) des Festkörpers (10), und
bei hohlen Festkörpern auch zu einer oder mehreren inneren Querschnittskonturen des Festkörpers zusammengefasst werden.

7. Verfahren (100) nach einem der vorangehenden Ansprüche,
wobei bei Schnittpunkten (S), von denen aus sich zwei zweite Strecken (30) erstrecken und die beiden zweiten Strecken (30) einen in der Betrachtungsebene liegenden Neigungswinkel ($\alpha$) einschließen,
eine Größe des Neigungswinkels ($\alpha$) ermittelt wird und,
wenn der Neigungswinkel ($\alpha$) kleiner 90° beträgt, die Schritte e), f) und g) ausgelassen werden.

8. Verfahren (100) nach einem der vorangehenden Ansprüche, bei dem je Betrachtungsebene (20) eine 2-dimensionale Bilddatei (18) gespeichert und/oder von einer visuellen Wiedergabe-Einheit dargestellt wird, deren Bild sich aus einer Vielzahl von in einem Raster angeordneten rechteckigen oder quadratischen Bildelementen (32), vorzugsweise Pixeln, zusammensetzt, wobei vorzugsweise diejenigen Bildelemente (32), mittels denen die zweiten Strecken (30) und die davon umschlossene Festkörperschicht dargestellt werden, sich von den restlichen Bildelementen des Bildes unterscheiden.

9. Verfahren (100) nach einem der vorangehenden Ansprüche, wobei der Parameter

- eine in der Betrachtungsebene liegende Querschnittsfläche,
- ein in der Betrachtungsebene liegendes Flächenträgheitsmoment,
- ein in der Betrachtungsebene liegender Flächenschwerpunkt,
- ein in der Betrachtungsebene liegendes Widerstandsmoment,
- ein in der Betrachtungsebene liegender Flächenträgheitsradius,
- ein in der Betrachtungsebene liegende Flächensteifigkeit, und/oder ein Volumen des Festkörpers oder dergleichen repräsentiert bzw. ist.

10. Verfahren (100) nach einem der Ansprüche 1 bis 8, wobei der Parameter ein in der Betrachtungsebene liegendes Flächenträgheitsmoment des Festkörpers ist und wobei in Schritt h) das in der Betrachtungsebene liegende Flächenträgheitsmoment des Festkörpers unter Anwendung des Satzes von Steiner aus der Festkörperschicht in Bezug auf eine vorbestimmte Achse, welche orthogonal zur Betrachtungsebene steht, ermittelt wird.

11. Verfahren (100) nach Anspruch 10, bei dem für die betreffende Betrachtungsebene

- die Größe der Gesamtquerschnittsfläche ($A_{FK-Schicht}$) der Festkörperschicht und
- die Lage des Flächenschwerpunkts ($F_{SP}$) der Festkörperschicht ermittelt wird, und

bei dem für jedes Element (32) der Festkörperschicht die Größe des Flächenträgheitsmoments ($I_{FK-schicht}$) in Bezug auf die vorbestimmte Achse ermittelt wird.

12. Vorrichtung zur Datenverarbeitung, umfassend Mittel zur Ausführung der Schritte des Verfahrens nach einem der vorgehenden Ansprüche.

13. Computerprogrammprodukt, umfassend Befehle, die bei der Ausführung des Programms durch einen Computer diesen veranlassen, das Verfahren (100) nach einem der Ansprüche 1 bis 11 auszuführen.

14. Computerlesbares Speichermedium, umfassend Befehle, die bei der Ausführung durch einen Computer diesen veranlassen, das Verfahren (100) nach einem der Ansprüche 1 bis 11 auszuführen.

15. Bereitstellen eines Wertesatzes, der mittels der Durchführung des Verfahrens nach einem der Ansprüche 1 bis 11 ermittelt wurde.

FIG 1

10, 12

14

Z

FIG 2

1

20

n

## FIG 3

## FIG 4

FIG 5

34    36

38

18, 20

FIG 6

$X_{i,S,pxl}$

y

36

34

$F_{SP}$

38

x

18, 20

$a_{pxl}$

32

$a_{pxl}$

FIG 7

## FIG 8

```
┌──────────────┐
│              │──── S102          ↙ 100
└──────────────┘
        │
        ▼
┌──────────────┐
│              │──── S104
└──────────────┘
        │
        ▼
┌──────────────┐
│              │──── S106
└──────────────┘
        │
        ▼
┌──────────────┐
│              │──── S108
└──────────────┘
        │
        ▼
┌──────────────┐
│              │──── S110
└──────────────┘
        │
        ▼
┌──────────────┐
│              │──── S112
└──────────────┘
        │
        ▼
┌──────────────┐
│              │──── S114
└──────────────┘
        │
        ▼
┌──────────────┐
│              │──── S116
└──────────────┘
```

**EP 3 905 095 A1**

Europäisches
Patentamt

European
Patent Office

Office européen
des brevets

# EUROPÄISCHER RECHERCHENBERICHT

Nummer der Anmeldung

EP 20 17 2141

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MURACH MICHELLE M ET AL: "Rib Geometry Explains Variation in Dynamic Structural Response: Potential Implications for Frontal Impact Fracture Risk", ANNALS OF BIOMEDICAL ENGINEERING, SPRINGER US, NEW YORK, Bd. 45, Nr. 9, 25. Mai 2017 (2017-05-25), Seiten 2159-2173, XP036303749, ISSN: 0090-6964, DOI: 10.1007/S10439-017-1850-4 [gefunden am 2017-05-25] * Zusammenfassung * * Seite 2161, Spalte 2, Absatz 2 * * Abbildung 2 * ----- | 1-15 | INV. G06F30/10 G06T7/11 G06T7/66 G06T11/40 |
| A | Anonymous: "Flächenträgheitsmoment - Wikipedia", , 2. April 2020 (2020-04-02), Seiten 1-7, XP055743021, Gefunden im Internet: URL:https://de.wikipedia.org/w/index.php?title=Flächenträgheitsmoment&oldid=198379943 [gefunden am 2020-10-22] * das ganze Dokument * ----- | 1-15 | |
| A | R Stuart Ferguson: "Chapter 4: Fast Realistic Rendering (part)" In: "Practical algorithms for 3D computer grapgics", 1. Januar 2001 (2001-01-01), A K Peters, XP055371239, ISBN: 978-1-56881-154-3 Seiten 87-117, * Seite 95, Spalte 2 - Seite 96 * ----- | 1-15 | RECHERCHIERTE SACHGEBIETE (IPC) G06F G06T |

Der vorliegende Recherchenbericht wurde für alle Patentansprüche erstellt

| Recherchenort | Abschlußdatum der Recherche | Prüfer |
|---|---|---|
| München | 22. Oktober 2020 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument